# EUROPEAN PATENT APPLICATION

(11) **EP 4 303 738 A1**
(43) Date of publication of application: **10.01.2024**
(21) Application number: 21928891.7
(22) Date of filing: 29.12.2021
(51) Int. Cl.: G06F 16/16

(54) **APPLICATION MANAGEMENT METHOD, ELECTRONIC DEVICE, AND STORAGE MEDIUM**

(30) Priority: 01.03.2021 CN 202110225759
(71) Applicant: GUANGDONG OPPO MOBILE TELECOMMUNICATIONS CORP., LTD., Dongguan, Guangdong 523860 (CN)
(72) Inventor: LIU, Taiwei, Dongguan, Guangdong 523860 (CN)
(74) Representative: Wu, Ting
(86) International application number: PCT/CN2021/142605
(87) International publication number: WO 2022/183820

(57) **Abstract**

Application management methods, electronic devices (100), and storage mediums are provided. The application management method comprises: determining whether a plurality of applications in the same folder are of the same type (012). And aggregating the plurality of applications and converting the folder into an aggregation icon (014) if the plurality of applications in the folder are of the same type. By means of the application management method, the electronic device (100) and the storage medium, the plurality of applications of the same type are aggregated, and a folder is converted into an aggregation icon, so as to facilitate a user in operating the plurality of applications of the same type by means of the aggregation icon.

## Description

### PRIOITY INFORMATION

This application requests priority and interest in Patent Application No. 202110225759.X filed with the State Intellectual Property Office of China on March 01, 2021, which is herein incorporated by reference in its entirety .

### TECHNICAL FIELD

This application relates to the technical field of application management of electronic devices, and in particular to an application management method, electronic devices and computer-readable storage media.

### BACKGROUND

Since a variety of needs exist for users, they install plurality of applications of different types or the same type (e.g., music, video, shopping, etc.) on their electronic devices . However, in the related art, poor management of the application makes it very inconvenient for users to operate.

### SUMMARY OF THE DISCLOSURE

Embodiments of the present application provide an application management method, an electronic device, and a computer-readable storage medium.

The disclosure relates to an application management method, the application management method includes: determining whether a plurality of applications in the same folder are of the same type. Aggregating a plurality of the applications and converting the folder into an aggregation icon if the plurality of the applications in the folder are of the same type.

The disclosure further relates to an electronic device, the electronic device can include followings. A processor, and the processor is configured to determine whether a plurality of applications in the same folder are of the same type. and the processor is configured to aggregate a plurality of the applications and convert the folders into one aggregated icon, if the plurality of the applications in the folder are of the same type.

The disclosure further relates to an electronic device, the electronic device includes one or more processors and a memory. The memory stores a computer program. The steps of the application management method described in the above-mentioned embodiment are implemented in the case where said computer program is executed by said processor.

The disclosure further relates to a computer-readable storage medium, the computer-readable storage medium stores a computer program thereon. The steps of the application management method described in the above-mentioned embodiment are implemented in the case where said computer program is executed by said processor.

Additional aspects and advantages of the present application will be set forth, in part, from the following description, and in part will become apparent from the following description, or may be learned by practice of the present application.

### BRIEF DESCRIPTION OF THE DRAWINGS

The above and/or additional aspects and advantages of the embodiments of the present disclosure will become apparent and readily understood from the following description when taken in conjunction with the accompanying drawings, wherein:
Fig. 1 is a schematic flowchart illustrating an application management method according to an embodiment of the present disclosure.
Fig.2 is a schematic diagram illustrating an electronic device according to an embodiment of the present disclosure.
Fig.3 is a schematic flowchart illustrating an application management method according to an embodiment of the present disclosure.
Fig 4 is a schematic diagram illustrating a scene schematic of an application management method according to an embodiment of the present disclosure.
Fig.5 is a schematic flowchart illustrating an application management method according to an embodiment of the present disclosure.
Fig.6 is a schematic flowchart illustrating an application management method according to an embodiment of the present disclosure.
Fig.7 is a schematic diagram illustrating a scene schematic of an application management method according to an embodiment of the present disclosure.
Fig.8 is a schematic flowchart illustrating an application management method according to an embodiment of the present disclosure.
Fig.9 is a schematic flowchart illustrating an application management method according to an embodiment of the present disclosure.
Fig. 10 is a schematic flowchart illustrating an application management method according to an embodiment of the present disclosure.
Fig.11 is a schematic flowchart illustrating an application management method according to an embodiment of the present disclosure.
Fig.12 is a schematic diagram illustrating a scene schematic of an application management method according to an embodiment of the present disclosure.
Fig.13 is a schematic flowchart illustrating an application management method according to an embodiment of the present disclosure.
Fig.14 is a schematic diagram illustrating a scene schematic of an application management method according to an embodiment of the present disclosure.
Fig.15 is a schematic diagram illustrating a scene schematic of an application management method according to an embodiment of the present disclosure.
Fig.16 is a schematic diagram illustrating a scene schematic of an application management method according to an embodiment of the present disclosure.
Fig.17 is a schematic flowchart illustrating an application management method according to an embodiment of the present disclosure.
Fig.18 is a schematic diagram illustrating a scene schematic of an application management method according to an embodiment of the present disclosure.
Fig.19 is a schematic flowchart illustrating an application management method according to an embodiment of the present disclosure.
Fig.20 is a schematic diagram illustrating an electronic device according to an embodiment of the present disclosure.

### DETAILED DESCRIPTION

The following describes in detail the embodiments of the present application, examples of which are illustrated in the drawings, wherein the same or similar reference numerals refer to the same or similar elements or elements having the same or similar functions throughout. The embodiments described below with reference to the drawings are exemplary, and are intended to be used to explain the present application, but should not be construed as a limitation to the present application.

The following disclosure provides many different embodiments or examples for implementing different structures of the present application. To simplify the disclosure of the present application, the components and arrangements of specific examples are described below. Of course, they are only examples and are not intended to limit the application. Furthermore, this application may repeat reference numerals and/or letters in different examples. This repetition is for the purpose of simplicity and clarity and does not in itself indicate a relationship between the various embodiments and arrangements discussed. In addition, this application provides examples of various specific processes and materials, but skill person in the art may recognize the applicability of other processes and/or other materials.

Embodiments of the present application provide an application management method, includes: determining whether a plurality of applications in the same folder are of the same type; aggregating the plurality of applications and converting the folder into an aggregate icon if the plurality of applications in the folder are of the same type.

In some implementations, aggregating the plurality of applications and converting the folder into an aggregate icon if the plurality of applications in the folder are of the same type includes: displaying an aggregation button if the plurality of the applications in the folder are of the same type; aggregating the plurality of applications and converting the folder into an aggregate icon in response to receiving a trigger signal of the aggregation button.

In some implementations, the application management method further includes: opening one of the applications in response to receiving a first trigger signal of the aggregation icon.

In some implementations, the application management method further includes: displaying the plurality of icons of the applications separately in response to receiving a second trigger signal of the aggregated icon.

In some implementations, the application management method further includes: opening a triggered application in response to receiving a trigger signal of an icon of the application.

In some implementations, the application management method further includes: displaying a dissolve button in response to receiving a third trigger signal of the aggregation icon; dissolving the plurality of the applications aggregated and converting the aggregation icon into the folder in response to receiving a trigger signal of the dissolve button.

In some implementations, the application management method further includes: displaying a search button in response to receiving a fourth trigger signal of the aggregation icon; displaying a search interface in response to receiving a trigger signal of the search button, the search interface is configured to search all the contents of the applications.

In some implementations, the plurality of applications include a current application that is running, and a display interface of the current application is configured to display an application bar, the application management method further comprises: displaying a search interface in response to receiving a first operation signal of the application bar, the search interface is configured to search all the contents of the applications.

In some implementations, the search interface is configured to display icons of the applications, and the application management method further comprises: displaying the first search result of each of the applications in the search interface; opening the application and displaying the corresponding second search result in response to receiving the trigger signal of the icon of the application in the search interface.

In some implementations, the plurality of applications include a current application that is running, the application management method comprises: displaying the icons of the applications in the display interface of the current application; switching the triggered application to the current application in response to receiving a trigger signal of the icon of the application.

In some implementations, the display interface of the current application is configured to display an application bar, and the application bar is configured to display the icons of the applications, and the application management method further comprises: reducing the application bar by a preset multiple in response to receiving a second operation signal on the application bar; enlarging the application bar to a preset state in response to receiving a third operation signal on the application bar.

Embodiments of the present application provide an electronic device, the electronic device comprises a processor, and the processor is configured to determine whether a plurality of applications in the same folder are of the same type, and the processor is configured to aggregate the plurality of applications in the folder and convert the folder into an aggregate icon if the applications are of the same type.

In some implementations, the processor is further configured to: display an aggregation button if a plurality of the applications in the folder are of the same type; aggregate the plurality of applications and converting the folder into an aggregate icon in response to receiving a trigger signal of the aggregation button.

In some implementations, the processor is further configured to: open one of the applications in response to receiving a first trigger signal of the aggregation icon.

In some implementations, the processor is further configured to: display the plurality of icons of the application in response to receiving a second trigger signal on the aggregated icon.

In some implementations, the processor is further configured to: open a triggered application in response to receiving a trigger signal of an icon of the application.

In some implementations, the processor is further configured to: display a dissolve button, in response to receiving a third trigger signal of the aggregation icon, dissolve the plurality of the applications aggregated and converting the aggregation icon into the folder in response to receiving a trigger signal of the dissolve button.

In some implementations, the processor is further configured to: display a search button in response to receiving a fourth trigger signal of the aggregation icon; display a search interface in response to receiving a trigger signal of the search button, the search interface is configured to search all the applications.

In some implementations, the plurality of applications comprises a current application that is running, and the processor is further configured to: displaying a search interface in response to a first operation signal on the application bar, the search interface is configured to search all the applications.

In some implementations, the processor is further configured to: display the first search result of each of the applications in the search interface; open the application and displaying the corresponding the second search result in response to receiving the trigger signal of the icon of the application in the search interface.

In some implementations, the plurality of applications comprises a current application that is running, and the processor is further configured to: display the icons of the applications in the display interface of the current application; switch the triggered application to the current application in response to receiving a trigger signal of the icon of the application.

In some implementations, the processor is further configured to: reduce the application bar by a preset multiple in response to receiving a second operation signal of the application bar; enlarge the application bar to a preset state in response to receiving a third operation signal of the application bar.

Embodiments of the present application further provide an electronic device, the electronic device comprises one or more processors and a memory, wherein the memory stores a computer program, when the computer program is executed by the processor, the steps of the application management method described in any one of embodiments above are implemented..

Embodiments of the present application further provide a computer-readable storage medium on which a computer program is stored, wherein when the computer program is executed by a processor, the steps of the application management method described in any one of embodiments above

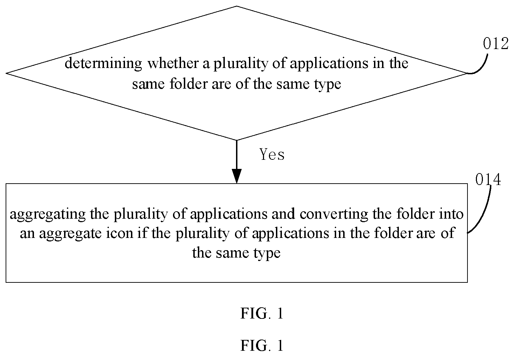

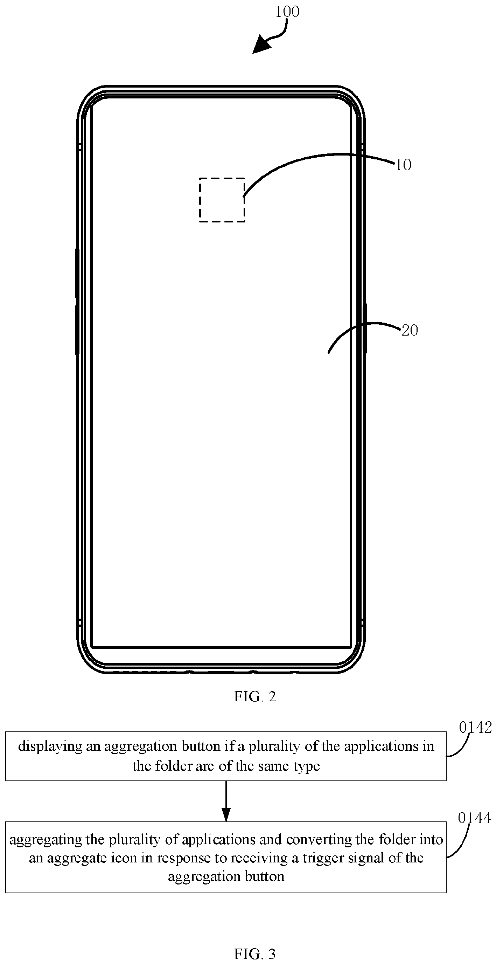

Please refer to FIG. 1 and FIG. 2 , the application management method of the embodiment of the present application includes:
012: Determining whether a plurality of applications in the same folder are of the same type.
014: Aggregating the plurality of applications if the plurality of plurality of applications in the folder are of the same type, and converting the folder into an aggregate icon.

The application management method of the embodiment of the present application may be implemented by the electronic device 100 of the embodiment of the present application. Specifically, the electronic device includes a processor 10, and the processor 10 is configured to determine whether the plurality of applications in the same folder are of the same type, and to Aggregate and convert folders into an aggregate icon if the plurality of applications in the folder are of the same type..

The application management method and electronic device 100 described above, a plurality of applications of the same type are aggregated, and a folder is converted into an aggregation icon, so as to facilitate a user in operating the plurality of applications of the same type by means of the aggregation icon.

Specifically, the electronic device 100 includes a smart phone, a tablet computer, a personal computer or other terminal devices. In the embodiment illustrated in FIG. 3 , the electronic device 100 is a smartphone. The electronic device 100 includes a display part 20, and the display part 20 may include a display screen, a touch display screen, and the like. The display unit 20 includes a display area for displaying images.

At block 012, the folder may be pre-established by the user, or may be pre-established by the electronic device manufacturer, or may be automatically classified and established by the electronic device 100 after identifying the types of the plurality of applications. The folder contains at least two apps. Types can include music, video, shopping, reading, office, social, etc. The plurality of applications are of the same type, that is, plurality of applications are music, video, shopping, reading, office, or social applications.

At block 014, aggregation can be understood as integrating a plurality of applications of the same type in the original folder into a new collection, and replacing the original folder with this new collection, which is different from the organizational form of the folder and in the form of an aggregation icon. In some embodiments, the plurality of applications in this new collection are associated with each other, so as to realize the linkage in response to operations of user, and through this new collection, the function linkage of the plurality of applications of the same type in the original folder can be realized, thus making the operation of the plurality of applications of the same type more convenient and easy to manage.

Further, in some embodiments, when the plurality of applications in the folder are not of the same type, the icons and functions of the folder are kept unchanged, the icons of the plurality of applications in the folder are kept unchanged, and the functions of the plurality of applications are independent of each other, the plurality of applications are not aggregated, and folders are not converted into aggregate icons.

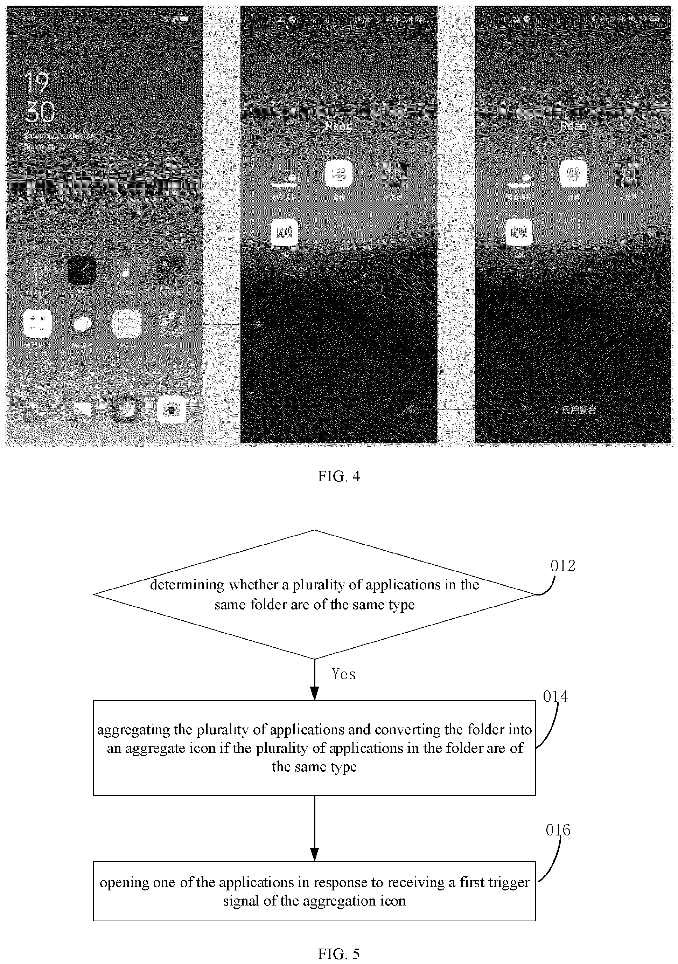

The method can include operations illustrated in Fig 3 and Fig 4, in some embodiments, the block 014 may include block 0142 and block 0144.

0142: Displaying the aggregation button if the plurality of applications in the folder are of the same type.

0144: Aggregating the plurality of applications and converting the folder into an aggregation icon in response to receiving a trigger signal of the aggregation button.

The application management method of the above embodiments can be implemented by the electronic device 100 of the embodiments of the present application. Specifically, the processor 10 is configured to display an aggregation button when the plurality of applications in the folder are of the same type; and to aggregate the plurality of applications and convert the folder into an aggregation icon according to a trigger signal acting on the aggregation button.

In this way, user can aggregate the plurality of applications after triggering the aggregation button.

Specifically, each application is preset with a type label, and by identifying the type label, it can be determined whether the plurality of applications in the folder are of the same type. When the plurality of applications in the same folder are of the same type, an aggregation button is displayed, the user clicks the aggregation button to generate a trigger signal, and the electronic device 100 aggregates the plurality of applications after receiving the trigger signal. In some embodiments, the aggregation button is not displayed when the plurality of applications in the same folder are of different types.

In other implementations, when plurality of applications in the same folder are of the same type, it is determined whether there is an aggregation instruction, and the aggregation instruction includes preset control gestures, control voices, etc., and the electronic device 100 can detect the acquired external images or sound, so as to determine whether there is an aggregation instruction, and when it is determined that there is an aggregation instruction, plurality of applications are aggregated according to the aggregation instruction, and the folder is converted into an aggregation icon.

Further, in some embodiments, when the plurality of applications in the folder are not of the same type, the aggregation button is not displayed, the plurality of applications in the folder are not aggregated, and the functions of the plurality of applications are independent of each other.

Referring to FIG. 5, in some embodiments, the application management method further includes:
016: Opening one of the applications in response to receiving a first trigger signal of the aggregation icon.

The application management method of the above embodiments can be implemented by the electronic device 100 of an embodiment of the present application. Specifically, the processor 10 is configured to open one of the applications when receiving the first trigger signal acting on the aggregation icon.

In this way, an application can be quickly opened to meet the user's usage requirements of the type of application.

Specifically, after aggregating the plurality of applications, the original folder is converted into an aggregated icon, and the icon of the original folder and the aggregated icon are different in appearance and function. In some embodiments, the color of the icon of the original folder is white or transparent, and the pattern of the icon of the original folder is the thumbnail icon of each application; There is a special logo before the name of the aggregation icon, and the aggregation icon is colored, and the pattern of the aggregation icon is a sketch of the type of the plurality of applications. For example, when the plurality of applications are of the music type, the pattern of the aggregation icon is musical notes; when the plurality of applications are of the shopping type, the pattern of the aggregation icon is a shopping cart. When the plurality of applications are of the reading type, the pattern of the aggregated icon is a book; when the plurality of applications are of the office type, the pattern of the aggregated icon is a desk. In some embodiments, before the aggregation, when receiving the first trigger signal on the icon of the original folder, the icons of the plurality of applications in the folder are displayed, user can run the Application by means of clicking the icon of one of the applications. after the aggregation, the icon of the original folder is replaced with the aggregation icon, and when the first trigger signal of the aggregation icon is received, one of the plurality of applications is directly run. This application which being run directly a pre-defined application, the most recently used application, or the most frequently used application.. Further, the first trigger signal may be generated according to the action of the user, the action could be clicking, double-clicking or long pressing the corresponding icon.

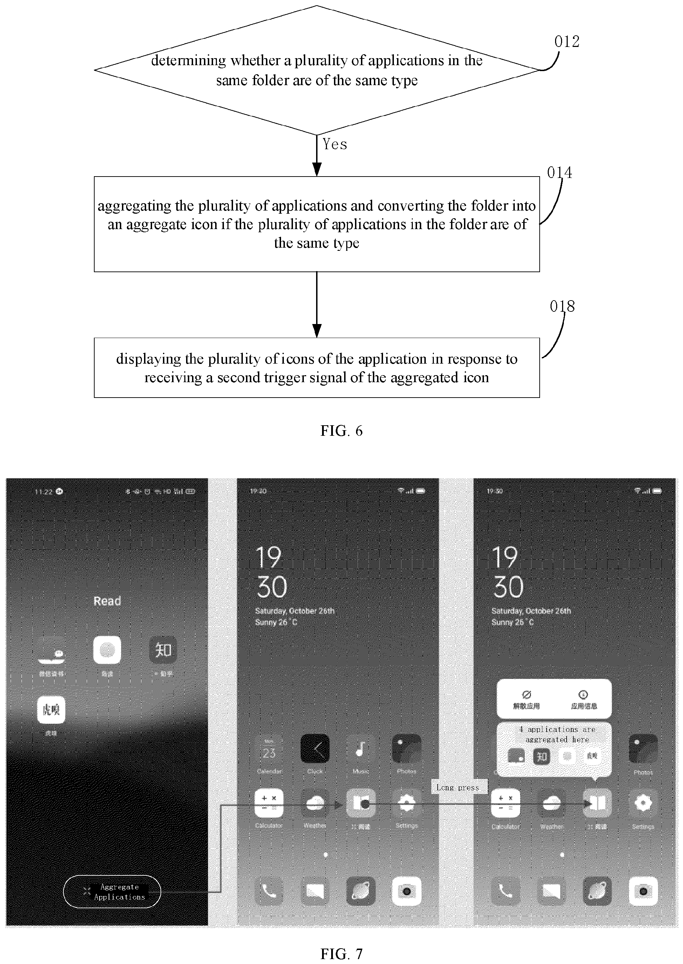

Referring to FIG. 6 and FIG. 7, in some embodiments, the application management method further includes:

At the block 018, the method may include displaying the plurality of icons of the application in response to receiving a second trigger signal of the aggregated icon.

The application management method of the above-described embodiments can be implemented by the electronic device 100 of the embodiments of the present application. Specifically, the processor 10 is configured to display the icons of the plurality of applications respectively when receiving the second trigger signal of the aggregated icons.

In this way, the user can select the corresponding application according to the needs, which can meet the different usage requirements of the user.

Specifically, the second trigger signal may be generated according to the action of clicking, double-clicking or long pressing on the aggregated icon. The generation method of the second trigger signal are different from the generation method of the first trigger signal. That is, if the second trigger signal is generated by clicking on the aggregation icon, the first trigger signal is generated by double-clicking on the aggregation icon, or by means of long pressing on the aggregation icon, or other methods. If the second trigger signal is generated by means of long pressing the aggregation icon, the first trigger signal is generated by clicking on the aggregation icon, double-clicking on the aggregation icon or other methods. If the second trigger signal is generated by double-clicking on the aggregation icon, the first trigger signal is generated by clicking on the aggregation icon, long pressing on the aggregation icon, or other methods.

Further, when the second trigger signal of the aggregated icon is received, all the icons of the plurality of applications can be displayed in the display area, simultaneously. or a part of the plurality of icons of applications can be displayed, another part of the icons of applications can be displayed in response to a switch command. That's to say, when the switch command is received, the processor 10 is configured to replace the displayed icons of the part of the applications with the icons of another part of the application.

In one embodiment, the number of applications in the folder is four. When the second trigger signal on the aggregation icon is received, the icons of the four applications are arranged in a horizontal " " shape above the aggregation icon. The display interface simultaneously displays the aggregation icon and the icons of the four applications, so that the user can select the icon of any one of the four applications, the electronic device 100 can run the corresponding application according to the user's choice.

In another embodiment, the number of applications in the folder is seven, when receiving the second trigger signal of the aggregated icon, the icons of the seven applications are arranged in a matrix on a specific page, and in the specific page, do not display the icons of any application other than those seven applications., so that the user can select the icon of any one of the seven applications, the electronic device 100 can run the corresponding application according to the user's choice.

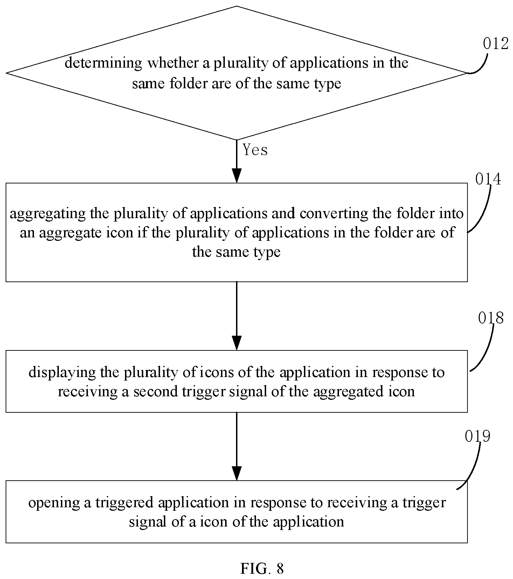

Referring to FIG. 8, in some embodiments, the application management method further includes:
019: opening a triggered application in response to receiving a trigger signal of an icon of the application.

The application management method of the above embodiments can be implemented by the electronic device 100 of the embodiment of the present application. Specifically, the processor 10 is configured to open the triggered application when receiving the trigger signal of the icon of the application.

In this way, one application among the plurality of applications that have been aggregated together can be opened according to the needs of the user.

In one embodiment, the user clicks on the icon of one of the multiple applications that have been aggregated together to generate a trigger signal, and the triggered application is opened when the electronic device 100 receives the trigger signal of the icon of the corresponding application.

In some embodiments, upon receiving the second trigger signal of the aggregated icons, icons of the plurality of applications and a detail-button are displayed respectively. When it can be determined that the detail-button is triggered, the detailed information of the plurality of applications is displayed. In this way, the functions of the aggregated icons can be enriched.

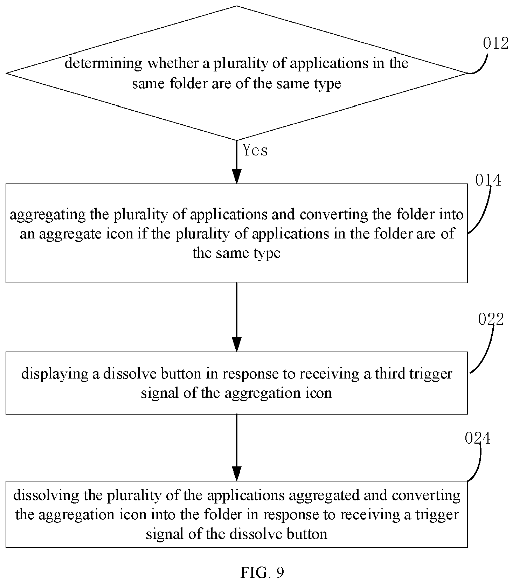

Referring to FIG. 9, in some embodiments, the application management method further includes:
At block 022, the method may include displaying a dissolve button, in response to receiving a third trigger signal of the aggregation icon.
At block 024, the method may include dissolving the plurality of the applications aggregated and converting the aggregation icon into the folder in response to a trigger signal of the dissolve button.

The application management method of the above embodiments can be implemented by the electronic device 100 of the embodiment of the present application. Specifically, the processor 10 is configured to display a dissolve button when receiving the third trigger signal of the aggregation icon, and to dissolve the plurality of applications and convert the aggregation icon into a folder according to the trigger signal on the dissolve button.

In this way, the user can cancel the aggregation of plurality of applications after triggering the dissolve button.

Specifically, the third trigger signal may be generated according to the action of clicking, double-clicking or long pressing on the aggregated icon. The third trigger signal may be the same as the second trigger signal, and the third trigger signal may also be different from the second trigger signal. The dissolve button of the aggregation icon and the icons of plurality of applications corresponding to the aggregation icon may be displayed at the same time, and the dissolve button of the aggregation icon and the icons of the plurality of applications corresponding to the aggregation icon may not be displayed simultaneously. In some embodiments, if the third trigger signal is the same as the second trigger signal, when the third trigger signal of the aggregation icon is received, the dissolve button of the aggregation icon and the icons of the plurality of applications corresponding to the aggregation icon are simultaneously Display. If the third trigger signal is different from the second trigger signal, when the third trigger signal of the aggregation icon is received, the dissolve button of the aggregation icon is displayed, the icons of plurality of applications corresponding to the aggregation icon are not displayed; If receiving the second trigger signal of the aggregation icon, while the icons of plurality of applications corresponding to the aggregation icon are displayed, and the dissolve button of the aggregation icon is not displayed.

The third trigger signal is generated in a different manner from the first trigger signal, That is, if the third trigger signal is generated by clicking on the aggregation icon, the first trigger signal is generated by double-clicking on the aggregation icon or the first trigger signal is generated by long pressing on the aggregation icon, or other methods. If the third trigger signal is generated by long pressing on the aggregation icon, the first trigger signal is generated by clicking on the aggregation icon, double-clicking on the aggregation icon or other methods. If the third trigger signal is generated by double-clicking on the aggregation icon, the first trigger signal is generated by clicking on the aggregation icon, long pressing on the aggregation icon, or other methods.

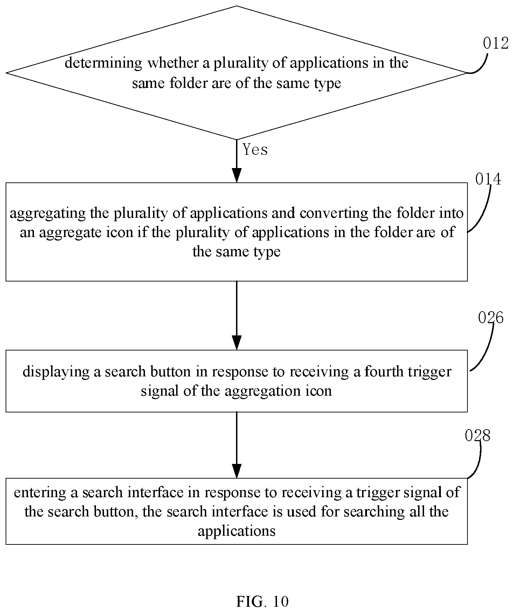

Referring to FIG. 10, in some embodiments, the application management method further includes:
026: Displaying a search button in response to receiving a fourth trigger signal of the aggregation icon.
028: Displaying a search interface in response to receiving a trigger signal of the search button, the search interface is configured to search contents of all the applications.

The application management method of the above embodiment can be implemented by the electronic device 100 of the embodiment of the present application. Specifically, the processor 10 is configured to display a search button when receiving the fourth trigger signal on the aggregation icon, and to display a search interface according to the trigger signal on the search button, and the search interface can be configured to search contents of all the applications.

In this way, all the aggregated applications can be searched at the same time, which effectively improves the search efficiency.

Specifically, the fourth trigger signal may be generated according to the action of clicking, double-clicking or long pressing on the aggregated icon. The fourth trigger signal may be the same as any one of the second trigger signal and the third trigger signal, and the fourth trigger signal may also be different from both the second trigger signal and the third trigger signal. The search button, the dissolve button of the aggregation icon, and the icons of the plurality of applications corresponding to the aggregation icon may be displayed at the same time. The search button, the dissolution button of the aggregation icon, and the icons of plurality of applications corresponding to the aggregation icon may not be displayed simultaneously. In some embodiments, when the fourth trigger signal is the same as any one of the second trigger signal and the third trigger signal, upon receiving the fourth trigger signal on the aggregation icon, the search button, the dissolve button of the aggregation icon and the icons of the plurality of applications corresponding to the aggregation icon are displayed simultaneously; when the fourth trigger signal is different from the second trigger signal and the third trigger signal, when the fourth trigger signal of the aggregation icon is received, a search button is displayed, the disband button of the aggregate icon and the icons of the plurality of applications corresponding to the aggregate icon are not displayed. When the third trigger signal of the aggregate icon is received, the dissolve button of the aggregate icon is displayed, while the search button and the icons of the plurality of applications corresponding to the aggregate icon are not displayed. When receiving the second trigger signal on the aggregate icon, the icons of the plurality of applications corresponding to the aggregate icon can be displayed, the search button and the dissolve button of the aggregate icon need not be displayed.

In some embodiments, searching all aggregated applications at the same time can be implemented by simulating clicks. In other embodiments, it can also be implemented by other methods, for example, the server resources of each application can be packaged into an integrated resource library that can be searched in the integrated resource library at a certain time.

The generation method of the fourth trigger signal is different from that of the first trigger signal. That is, if the fourth trigger signal is generated by clicking on the aggregation icon, the first trigger signal is generated by double-clicking on the aggregation icon, or long pressing on the aggregation icon. It should be noted that the fourth trigger signal can be generated in other ways. If the fourth trigger signal is generated by long pressing on the aggregation icon, the first trigger signal is generated by clicking on the aggregation icon, double-clicking on the aggregation icon or other methods. If the fourth trigger signal is generated by double-clicking on the aggregation icon, the first trigger signal is generated by clicking on the aggregation icon, long pressing on the aggregation icon, or other methods.

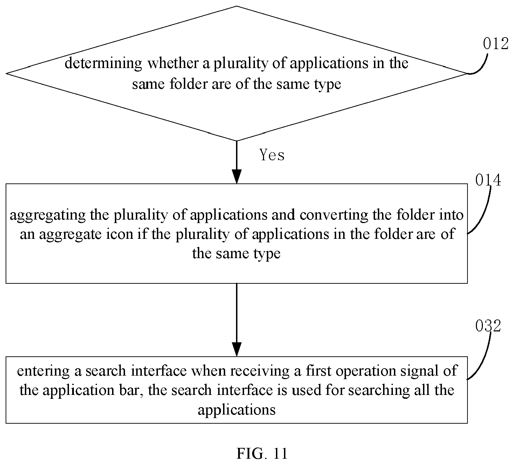

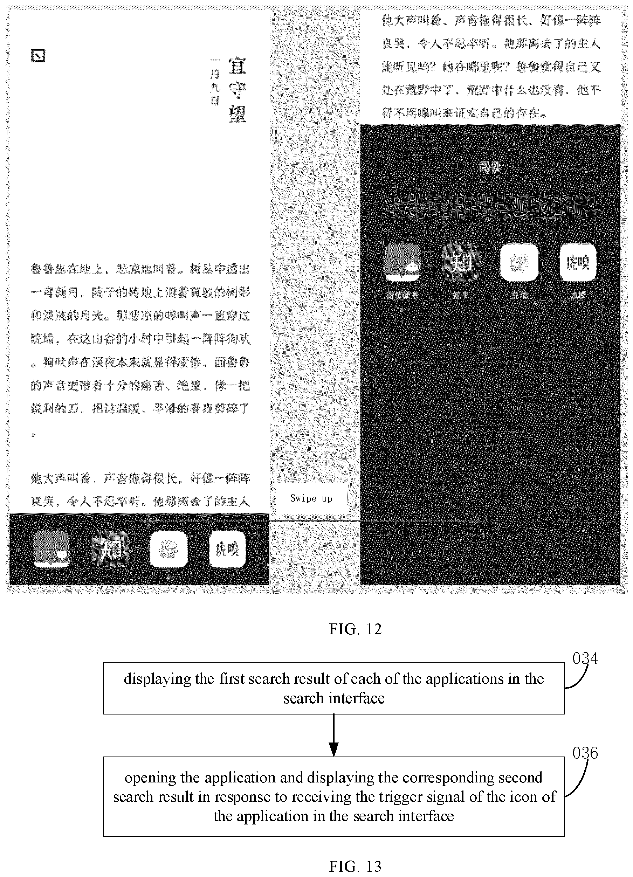

Referring to FIG. 11 and FIG. 12, in some embodiments, the plurality of applications include a current application that is running. A display interface of the current application can be used to display an application bar, and the application management method further includes:
032: displaying a search interface in response to receiving a first operation signal of the application bar. The search interface can be configured to search contents of all the applications.

The application management method of the above embodiments can be implemented by the electronic device 100 of the embodiments of the present application. Specifically, the processor 10 is configured to display a search interface when receiving the first operation signal on the application bar, and the search interface can be configured to search contents of all the applications.

In this way, all the aggregated applications can be searched at the same time, which effectively improves the search efficiency.

Specifically referring to Fig.12 in some embodiments, the application bar includes a handle 122, When the user drags the handle in the first direction continuously, the first operation signal can be generated. The size of the search interface may be less than or equal to the size of the display interface. The search interface includes icons of all the applications corresponding to the aggregation icon and search boxes . The user can input keywords in the search box. The electronic device 100 can search for all applications based on the obtained keywords.

In some implementations, the current application may be understood to be one of a plurality of applications that is running and occupies the majority of the display area of the display unit 20.

Referring to FIG. 13, in some embodiments, the search interface is configured to display the icon of the application, and the application management method further includes:
034: Displaying the first search result of each of the applications in the search interface.
036: Opening the application and displaying the corresponding second search result in response to receiving the trigger signal of the icon of the application in the search interface.

The application management method of the above embodiments can be implemented by the electronic device 100 of the embodiments of the present application. Specifically, the processor 10 is configured to display the first search result of each application in the search interface; and to open the application and display the corresponding second search result when receiving the trigger signal on the icon of the application in the search interface.

In this way, users could determine what applications need to be run based on the first search result and get the final search content.

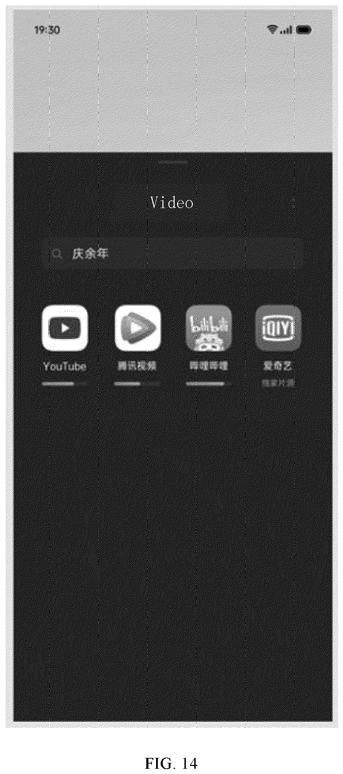

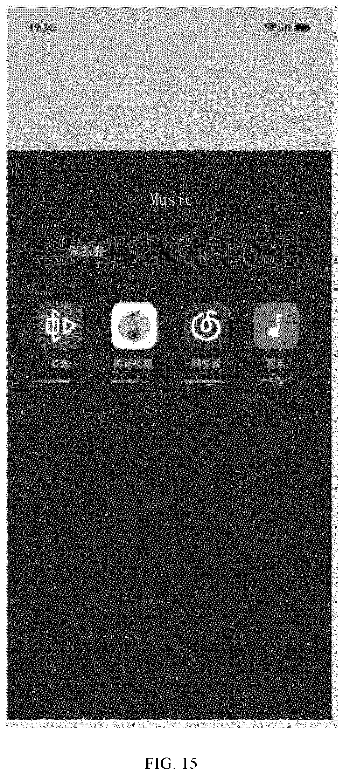

Specifically, the first search result of each application may include progress of search and evaluation of search results. Referring figures 14-16, the search progress can be displayed in the form of a progress bar or a percentage. The user can know the current search progress of each application through the progress bar or the percentage. The evaluation of search results is formed according to the search results of each application. For example, when searching for "Qing Yu Nian" in a video-type application, the search evaluation can be "exclusive film source", "most played", "most commented", etc. When searching for "Song Dongye" in a music-type application, the search evaluation can be "exclusive copyright", etc. when searching for "OPPO RENO 3" in a shopping-type application, the search evaluation can be "official spot", "lowest price" , "most praised", etc. Users can quickly decide the application that needs to be run based on the evaluation of the first search results.

Further, the user clicks on the icon of the application which was determined to be run to generate a corresponding trigger signal, and the electronic device 100 opens the application and displays the corresponding second search result according to the trigger signal received . Second search results can be generated by searching for keywords in the application which was determined to be run.

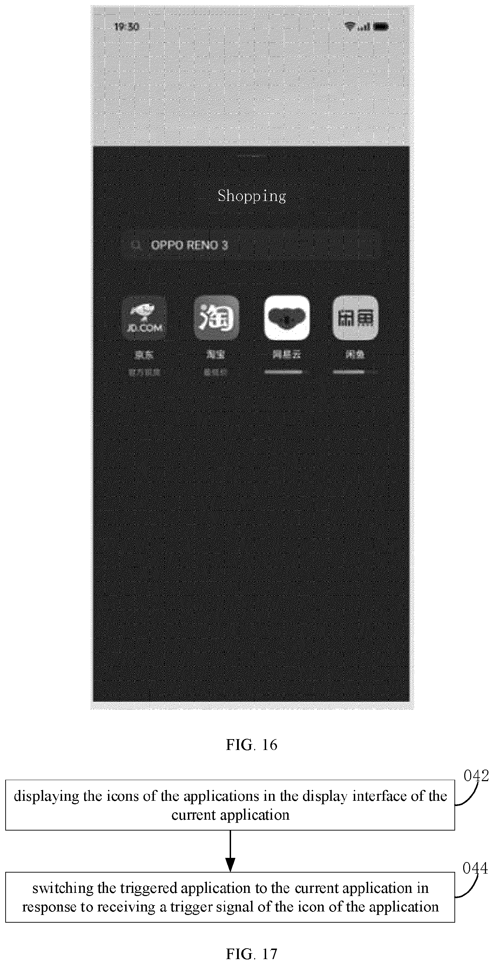

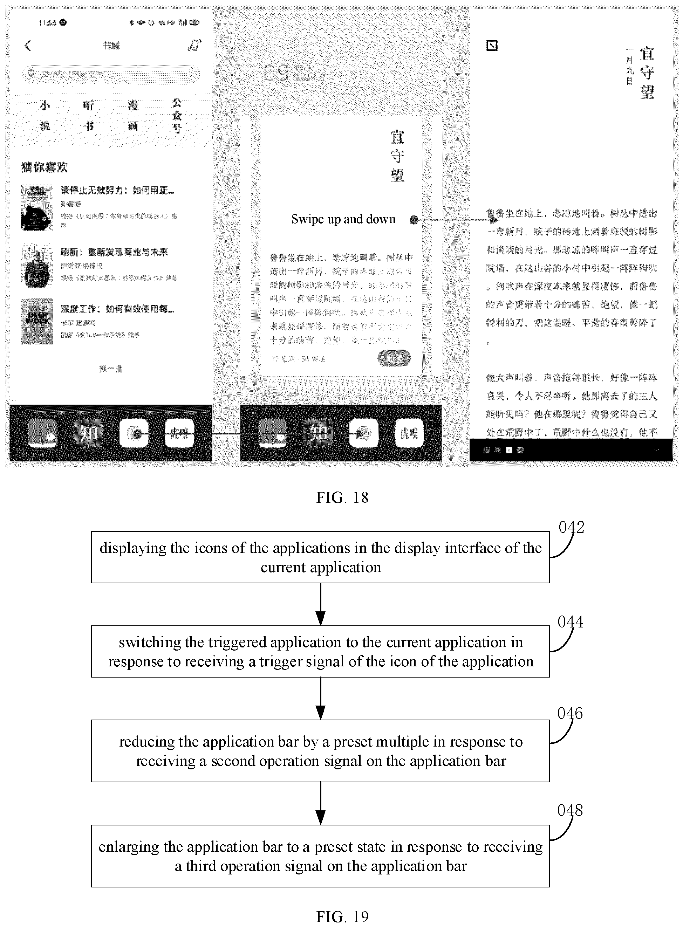

Referring to FIG. 17 and FIG. 18, in some embodiments, the plurality of applications include a current application that is running, and the application management method includes:
At block 042, the method may include displaying the icons of the applications in the display interface of the current application.
At block 044, the method may include switching the triggered application to the current application in response to receiving a trigger signal of the icon of the application.

The application management method of the above embodiments can be implemented by the electronic device 100 of the embodiments of the present application. Specifically, the processor 10 is configured to display the icons of the applications in the display interface of the current application, and to switch the triggered application to the current application when receiving the trigger signal on the icon of the application.

In this way, the icon of the application is displayed on the display interface of the current application. Without exiting the display of the current application, you can directly switch the current application to another application by triggering the icon of another application on the current application interface, which are of the same type as the current application, thus effectively simplifying the steps of switching the current application and improving the speed of switching applications. In the related art, to switch from the display interface of the current application to the display interface of another application, it is necessary to exit the display interface of the current application firstly, and then diplay the display interface of another application by electing the icon of the application need to open.

At block 042, the icons of the applications displayed on the display interface may be icons of some applications or icons of all applications among the plurality of applications. The icons of the application displayed on the display interface may include the icon of the current application, or may not include the icon of the current application. The size and pattern of the icon can be set by the user, and can also be set by the electronic device 100 by default.

At block 044, the trigger signal can be input by the user, that is, the user can generate the trigger signal by manually clicking on the icon of the application, or can generate the trigger signal by means of preset control gestures, control voice, etc. to select the icon of the application. Therefore, when receiving the trigger signal of the icon of the application, the triggered application is switched to the current application.

Referring to FIG. 19, in some embodiments, the display interface of the current application is used to display an application bar, and the application bar is used to display the icons of the applications. The application management method further includes:
046: Reducing the application bar by a preset multiple in response to receiving a second operation signal of the application bar.
048: Enlarging the application bar to a preset state in response to receiving a third operation signal of the application bar.

The application management method of the above embodiment can be implemented by the electronic device 100 of the embodiments of the present applications. Specifically, the processor 10 is configured to reduce the application bar by a preset amount when receiving the second operation signal on the application bar; and when receiving the third operation signal on the application bar, enlarge the application bar to default state.

In this way, the display area of the display interface can be increased to ensure the display effect, and at the same time, to achieve fast switching between multiple applications.

Specifically, the second operation signal and the third operation signal may be generated according to corresponding actions of the user. In some embodiments, when the user slides the display interface of the current application up and down, the second operation signal may be generated. In other embodiments, when the user clicks, double-clicks or long presses the display interface of the current application, the second operation signal may be generated. In some embodiments, the application bar includes a handle, and when the user drags the handle to move in the second direction, a second operation signal can be generated; when the user drags the handle in the third direction, a third operation signal can be generated. The second direction is opposite to the third direction, and the third direction is the same as the first direction.

FIG. 12 illustrates a scene schematic of an application management method according to an embodiment. In this embodiment, the application bar 121 is in the shape of a rectangle. In the default state, the application bar displays a preset number (such as four) of application icons, Upon receiving a trigger signal from the icon acting on the application, the processor 10 switches the triggered application to the current application.. In some embodiments, when the number of applications is less than or equal to the preset number, the application bar displays icons of all applications; when the number of applications is greater than the preset number, the application bar display the icons of the preset number of applications, when a switching command is received, the icon of the currently displayed application is replaced with the icon of another application that is not displayed. When the second operation signal for the current application is received, the application bar is reduced by a preset multiple (e.g., 0.5 times) from the preset state. In some embodiments, the icon of the application and the application bar can be reduced and enlarged synchronously, When receiving a trigger signal acting on the icon of the application after shrinking, switch the triggered application to the current application, or when receiving a trigger signal acting on the icon of the application after shrinking, keep the display interface of the current application without switching to the triggered application.

In some implementations, the application bar is located at the bottom of the display interface of the current application. In this way, it is convenient for the user to operate, and the display effect of the display interface is effectively guaranteed. It can be understood that since the display interface is rectangular in shape and the bottom of the display interface is the short side of the rectangle, when the application bar is located on the long side of the display interface of the current application, the actual display area of the display interface becomes narrower, thus making the display effect degraded and unfavorable to the user's viewing. In addition, the top of the display interface is usually used to set the status bar for displaying signal, power and other status information. If the application bar is arranged at the top of the display interface of the current application, it will make the display content too crowded, which is not conducive to the user to quickly access the display content therein.

It should be pointed out that the specific numerical values mentioned above are only used as examples to describe the implementation of the present application in detail, and should not be construed as a limitation on the present application. In other examples or implementations or embodiments, other numerical values may be selected according to the present application, which are not specifically limited herein.

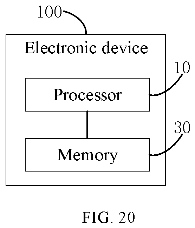

Referring to FIG. 20 , the electronic device 100 may include one or more processors 10 and a memory 30 . The memory 30 stores a computer program. When the computer program is executed by the processor 10 , the management method of any of the above-mentioned embodiments can be implemented.

In some embodiment, when the program is executed by the processor 10, the following steps of the application management method are implemented:
At operation 012, a determination can be made regarding whether a plurality of applications in the same folder are of the same type;
At operation 014, the plurality of applications can be aggregated, and the folder can be converted into an aggregate icon if the plurality of applications in the folder are of the same type.

In the above electronic device 100, the plurality of applications of the same type are aggregated, and the folder is converted into one aggregated icon, so that it is convenient for the user to operate the plurality of applications of the same type through the aggregated icon.

It should be noted that the above explanatory description of the implementation and beneficial effects of the application management method can also be applied to the electronic device 100 of this implementation; to avoid redundancy, it will not be expanded in detail here.

The computer-readable storage medium of the embodiments of the present application stores a computer program thereon, and when the program is executed by a processor, the steps of the application management method of any of the above-mentioned embodiments are implemented.

In some embodiments, when the program is executed by the processor, the following steps of the application management method are implemented:
012: Determining whether a plurality of applications in the same folder are of the same type.
014:Aggregating the plurality of applications and converting the folder into an aggregate icon if the plurality of applications in the folder are of the same type.

It is understood that a computer program includes computer program code. The computer program code may be in source code form, object code form, an executable file or some intermediate form, or the like. Computer-readable storage media may include: any entity or device capable of carrying computer program codes, recording media, U disk, removable hard disk, magnetic disk, optical disk, computer memory, read-only memory (ROM, Read-Only Memory), random memory Access memory (RAM, Random Access Memory), and software distribution media, etc. The processor may be a central processing unit, other general-purpose processors, a digital signal processor (Digital Signal Processor, DSP), an application specific integrated circuit (Application Specific Integrated Circuit, ASIC), a field-programmable gate array (Field-Programmable Gate Array) Array, FPGA) or other programmable logic devices, discrete gate or transistor logic devices, discrete hardware components, etc.

In the description of this specification, description with reference to the terms "embodiment," "example," etc. means that a particular feature, structure, material, or characteristic described in connection with the embodiment or example is included in at least one embodiment or example of the present application . In this specification, schematic representations of the above terms do not necessarily refer to the same embodiment or example. Furthermore, the particular features, structures, materials or characteristics described may be combined in any suitable manner in any one or more embodiments or examples.

Although the embodiments of the present application have been shown and described, it will be understood by those of ordinary skill in the art that various changes, modifications, substitutions and alterations can be made in these embodiments without departing from the principles and spirit of the present application, The scope of the application is defined by the claims and their equivalents.

## Claims

1. An application management method, comprising:
determining whether a plurality of applications in the same folder are of the same type;
aggregating the plurality of applications and converting the folder into an aggregate icon if the plurality of applications in the folder are of the same type.

2. The application management method according to claim 1 , wherein aggregating the plurality of applications and converting the folder into an aggregate icon if the plurality of applications in the folder are of the same type comprising:
displaying an aggregation button if the plurality of the applications in the folder are of the same type;
aggregating the plurality of applications and converting the folder into an aggregate icon in response to receiving a trigger signal of the aggregation button.

3. The application management method according to claim 1, wherein the application management method further comprises:
opening one of the applications in response to receiving a first trigger signal of the aggregation icon.

4. The application management method according to claim 1, wherein the application management method further comprises:
displaying the plurality of icons of the applications separately in response to receiving a second trigger signal of the aggregated icon.

5. The application management method according to claim 4, wherein the application management method further comprises:
opening a triggered application in response to receiving a trigger signal of an icon of the application.

6. The application management method according to claim 1, wherein the application management method further comprises:
displaying a dissolve button in response to receiving a third trigger signal of the aggregation icon;
dissolving the plurality of the applications aggregated and converting the aggregation icon into the folder in response to receiving a trigger signal of the dissolve button.

7. The application management method according to claim 1, wherein the application management method further comprising:
displaying a search button in response to receiving a fourth trigger signal of the aggregation icon;
diplaying a search interface in response to receiving a trigger signal of the search button, the search interface is configured to search the contents of all the applications.

8. The application management method according to claim 1 , wherein the plurality of applications include a current application that is running, and a display interface of the current application is configured to display an application bar, the application management method further comprises:
diplaying a search interface in response to receiving a first operation signal of the application bar, the search interface is configured to search all the applications.

9. The application management method according to claim 7 or 8, wherein the search interface is configured to display icons of the applications, and the application management method further comprising:
displaying the first search result of each of the applications in the search interface;
opening the application and displaying the corresponding second search result in response to receiving the trigger signal of the icon of the application in the search interface.

10. The application management method according to claim 1 , the plurality of applications include a current application that is running, the application management method comprising:
displaying the icons of the applications in the display interface of the current application;
switching the triggered application to the current application in response to receiving a trigger signal of the icon of the application.

11. The application management method according to claim 10, wherein the display interface of the current application is configured to display an application bar, and the application bar is configured to display the icons of the applications, and the application management method further comprising:
reducing the application bar by a preset multiple in response to receiving a second operation signal on the application bar;
enlarging the application bar to a preset state in response to receiving a third operation signal on the application bar.

12. An electronic device, the electronic device comprises a processor, and the processor is configured to determine whether a plurality of applications in the same folder are of the same type, and the processor is configured to aggregate the plurality of applications in the folder and convert the folder into an aggregate icon if the applications are of the same type.

13. The electronic device according to claim 12, wherein the processor is further configured to:
display an aggregation button if a plurality of the applications in the folder are of the same type;
aggregate the plurality of applications and converting the folder into an aggregate icon in response to receiving a trigger signal of the aggregation button.

14. The electronic device according to claim 12, wherein the processor is further configured to:
open one of the applications in response to receiving a first trigger signal of the aggregation icon.

15. The electronic device of claim 12, wherein the processor is further configured to:
display the plurality of icons of the application in response to receiving a second trigger signal on the aggregated icon.

16. The electronic device of claim 15, wherein the processor is further configured to:
open a triggered application in response to receiving a trigger signal of an icon of the application.

17. The electronic device of claim 12, wherein the processor is further configured to:
display a dissolve button, in response to receiving a third trigger signal of the aggregation icon,
dissolve the plurality of the applications aggregated and converting the aggregation icon into the folder in response to receiving a trigger signal of the dissolve button.

18. The electronic device of claim 12, wherein the processor is further configured to:
display a search button in response to receiving a fourth trigger signal of the aggregation icon,;
diplay a search interface in response to receiving a trigger signal of the search button, the search interface is configured to search all the applications.

19. The electronic device according to claim 12, wherein the plurality of applications comprises a current application that is running, and the processor is further configured to:
diplaying a search interface in response to a first operation signal on the application bar, the search interface is configured to search all the applications.

20. The electronic device according to claim 18 or 19, wherein the processor is further configured to:
display the first search result of each of the applications in the search interface;
open the application and displaying the corresponding the second search result in response to receiving the trigger signal of the icon of the application in the search interface.

21. The electronic device according to claim 12, wherein the plurality of applications comprises a current application that is running, and the processor is further configured to:
display the icons of the applications in the display interface of the current application;
switch the triggered application to the current application in response to receiving a trigger signal of the icon of the application.

22. The electronic device of claim 21, wherein the processor is further configured to:
reduce the application bar by a preset multiple in response to receiving a second operation signal of the application bar;
enlarge the application bar to a preset state in response to receiving a third operation signal of the application bar.

23. An electronic device, the electronic device comprises one or more processors and a memory, wherein the memory stores a computer program, when the computer program is executed by the processor, the steps of the application management method described in any one of claims 1-11 are implemented..

24. A computer-readable storage medium on which a computer program is stored, wherein when the computer program is executed by a processor, the steps of the application management method described in any one of claims 1-11 are implemented.
